# EUROPÄISCHE PATENTSCHRIFT

(11) **EP 2 960 189 B1**
(45) Veröffentlichungstag und Bekanntmachung des Hinweises auf die Patenterteilung: **21.12.2016**
(21) Anmeldenummer: 15171257.7
(22) Anmeldetag: 09.06.2015
(51) Int. Cl.: B65G 47/71, B65G 47/82

(54) **VORRICHTUNG UND VERFAHREN ZUM ABPACKEN VON TUBEN**
DEVICE AND METHOD FOR PACKING TUBES
PROCÉDÉ ET DISPOSITIF DESTINÉS À L'EMBALLAGE DE TUBES

(30) Priorität: 19.06.2014 CH 9362014
(43) Veröffentlichungstag der Anmeldung: 30.12.2015
(73) Patentinhaber: Texa AG, 7023 Haldenstein (CH)
(72) Erfinder: Benz, Gottlieb, 8890 Flums (CH)
(74) Vertreter: Wagner, Kilian

(56) Entgegenhaltungen:
- WO-A1-96/09975
- DE-A1-102007 017 035
- US-B1- 6 170 634

## Beschreibung

### Technisches Gebiet

Die vorliegende Erfindung betrifft ein Verfahren und eine Vorrichtung zum Abpacken von länglichen, mindestens annähernd hohlzylindrischen Produkteinheiten, vorzugsweise Tuben, Hülsen oder Dosen, die kontinuierlich von einer Produktionslinie kommen und mittels einer Gruppiereinrichtung in Produktgruppen von einer vorgebbaren Anzahl nebeneinander liegenden Produkteinheiten angeordnet werden, die einer Lage oder Reihe von in einer Schachtel abzulegenden Produkteinheiten entsprechen.

### Technischer Hintergrund

Verfahren und Vorrichtungen, die dazu dienen, Produkteinheiten zu Produktgruppen zu gruppieren und in Schachteln abzupacken, sind in vielen Ausführungsformen bekannt. Das verfahrensgemässe Vorgehen ebenso wie eine entsprechende Vorrichtung, um ein solches Verfahren durchzuführen, sind jeweils von der Art der Produkteinheiten stark abhängig.

So zeigt beispielsweise die US5732536 eine Vorrichtung mittels der Klebebänder in Schachteln abpackbar sind, die Deutsche Offenlegungsschrift DE2200390 eine Vorrichtung zum Abpacken von beispielsweise Haushaltspapierrollen, oder die EP350910 eine Vorrichtung zum Abpacken von Blumentöpfen. Das Handling von verschiedenartigen Produkten bedingt entsprechend verschiedenartige Verfahren und Vorrichtungen, und sogar bei scheinbar gleichartigen Produkten können je nach Grösse oder Gestaltungsform unterschiedliche Probleme auftauchen, die entsprechend auch unterschiedlich angepasste Verfahren und Vorrichtungen benötigen.

Die vorliegende Erfindung befasst sich mit einer Vorrichtung und einem Verfahren zum Abpacken von länglichen, mindestens annähernd hohlzylindrischen Produkteinheiten, vorzugsweise Tuben, Hülsen oder Dosen, wie sie beispielsweise aus der EP1114784 bekannt ist. Diese Vorrichtung wird an sich insbesondere verwendet zur Bildung von Gruppen von länglichen zylindrischen Produkteinheiten, die kontinuierlich von einer Produktionslinie kommen. Die gebildeten Produktgruppen werden auf einem fördernden Transportband in eine Abschiebeposition gebracht und von dort lagenweise in eine Schachtel geschoben.

Bei einem aus **CH682385** bekannten Verfahren ist zwischen einer kontinuierlichen Zuführung und einer diskontinuierlichen Abgabe ein Kompensator eingeschaltet, der die fortlaufend angelieferten Produkte kontinuierlich aufnimmt und diskontinuierlich abliefert. Dies erfolgt über eine zwischen Annahme- und Abgabestelle verlaufende Schlaufe einer geschlossenen Kette, die verlängert oder verkürzt werden kann.

Aus der FR2391126 ist eine Vorrichtung bekannt, um zylindrische Produkteeinheiten, die kontinuierlich von einer Produktionslinie kommen, zu gruppieren und gruppenweise zu einer Abgabeposition zu fördern. Hierbei umfasst die Förder- und Gruppiereinrichtungen zwei Transportschlitten, die hintereinander herlaufend arbeiten können und so gesteuert sind, dass der eine beschickt wird, während der andere zur Abgabestation fährt und dort entleert wird. Der entleerte Transportschlitten kann nun wieder zur Beschickungsstation gefahren werden, während die beschickte Station wieder zur Abgabestation fährt. Während der Zeit, in welcher keine Produkteinheiten in die Förder- und Gruppiereinrichtung gefüllt werden können, werden diese durch eine Schleusenklappe zurückgehalten.

In ähnlicher Weise arbeitet eine Vorrichtung gemäss EP0594917**.** Auch hier arbeitet die Förder- und Gruppiereinrichtung mit zwei voneinander unabhängig gesteuerten Transportschlitten, wobei jedoch eine Fördervorrichtung zwischen der Produktionslinie und der Vorrichtung zur Gruppierung der Produktionseinheiten angeordnet ist. Die Vorrichtung weist zudem eine gemeinsame Übergabestrecke auf, in der die Fördereinheit und das Transportband mit den Transportschlitten distanziert parallel zueinander verlaufen. Entgegen der zuvor beschriebenen Vorrichtung erfolgt die Übergabe auf die Förder- und Gruppiereinrichtung kontinuierlich und immer am selben Ort.

Bei der aus EP0774414 bekannte Vorrichtung wird mit Saugern gearbeitet, die beliebig aktiviert werden können. Entsprechend lassen sich äusserst einfach Produktgruppen unterschiedlicher Anzahl von Produkteinheiten entnehmen. Zudem lassen sich die Sauger in einem Greifer unterbringen, in dem die Greifer dem Durchmesser der Produkteinheiten angepasst in beliebigem Abstand zueinander angeordnet sein können. Diese können auf einen harmonikaartig arbeitenden Ablegetisch auf die Durchmesserdistanz zusammengerückt werden und dann in die entsprechende Form hinübergeschoben werden. Diese mit Druckluft arbeitende Vorrichtung ist insbesondere für Produktionslinien geeignet, auf den mit relativ kleiner Leistung gearbeitet wird, jedoch die Umstellung der Produktionslinie auf unterschiedliche Produkteinheiten relativ häufig erfolgt. Da praktisch keine Umrüstung erforderlich ist, macht sich in solchen Fällen die Vorrichtung trotz der kostenaufwendigen Gestaltung bezahlt. Für Vorrichtungen der eingangs genannten Art, bei der die Produktionslinie nicht häufig umgestellt wird, macht sich jedoch eine solche Anlage nicht bezahlt, da sie zu langsam arbeitet.

WO2005019035 beschreibt eine Vorrichtung bei welcher die Produkteinheiten auf einem Transportband mit Produktaufnahmen angelieferte werden. Wenn sich eine vorbestimmte Anzahl Produkteinheiten in der korrekten Position befindet, wird das Transportband gestoppt und die Produkteinheiten werden mittels einem Schieber auf einen Dornenträger gestossen. Auf diese Weise werden nacheinander mehrere Reihen Produkteinheiten zu einer Produktgruppe gruppiert. Nachteilig am Verfahren ist, dass bei der Übergabe der Produkteinheiten das Förderband jeweils gestoppt werden muss. Auch kann erst nach dem Zurückfahren des Schieber eine weiter Reihe Produkteinheiten angeliefert werden. Dies wirkt sich erheblich auf die gesamte Verarbeitungsrate der Gruppiervorrichtung und somit auf die Verpackungskosten auf.

Bei den heute auf dem Markt vorhanden Maschinen werden die Tuben entweder lagenweise in eine entsprechende Schachtel oder, wie in WO2005019035 beschrieben, lagenweise zur Zwischenlagerung auf einen plattenförmigen Dornenträger geschoben. Die maximalen Durchsatzraten bei den herkömmlichen Abpackvorrichtungen liegen im Bereich von 200 bis 300 Tuben pro Minute.

US 6,170,634 B1 beschreibt eine gattungsgemäße Vorrichtung.

### Darstellung der Erfindung

Eine Aufgabe der Erfindung ist es, eine Vorrichtung und ein Verfahren anzugeben, womit die Abpackgeschwindigkeit von länglichen, mindestens annähernd hohlzylindrischen Produkteinheiten, vorzugsweise Tuben, Hülsen oder Dosen, gegenüber den bekannten Vorrichtungen und Verfahren erheblich erhöht werden kann.

Dies wird mit einer Vorrichtung nach Anspruch 1 und einem Verfahren nach Anspruch 8 erreicht. Mit der erfindungsgemässen Vorrichtung und dem erfindungsgemässen Verfahren können die maximalen Durchsatzraten auf über 500 Tuben pro Minuten verdoppelt werden, indem der von der Produktionslinie kommende Strom von Produkteinheiten in zwei Ströme aufgeteilt und auf zwei Abpackeinheiten resp. auf die jeweiligen Gruppiereinrichtung von zwei Abpackeinheiten verteilt wird.

Erfindungsgemäß umfassen die Mittel eine Verteilereinrichtung mit zweiteiliger Verteilerplatte.

In einer Ausführungsform umfasst die Vorrichtung zum Zuführen von länglichen, mindestens annähernd hohlzylindrischen Produkteinheiten, vorzugsweise Tuben, Hülsen oder Dosen, zu zwei Abpackeinheiten ein Transportband zur kontinuierlichen Förderung von mehreren Produkteinheiten in eine Förderrichtung und eine erste und eine zweite Gruppiereinrichtung einer Abpackeinheit mittels welcher eine wählbare Anzahl von Produkteinheiten lagenweise zu in einer resp. zwei Schachteln ablegbaren Produktgruppen gruppiert werden können. Weiter umfasst die Vorrichtung eine Verteilereinrichtung, die eine zweiteilige Verteilerplatte zur Aufnahme einer wählbaren Anzahl Produkteinheiten vom Transportband aufweist. Die Verteilerplatte zur Aufnahme der wählbaren Anzahl Produkteinheiten ist parallel zur Förderrichtung des Transportbands und synchron mit der Laufgeschwindigkeit des Transportbands bewergbar. Erfindungsgemäß ist die Verteilerplatte in zwei Verteilerplattenhälften teilbar, die jeweils derart bewegbar sind, dass sie jeweils die Hälfte der von der Verteilerplatte aufgenommenen Produkteinheiten zur ersten Gruppiereinrichtung respektive zur zweiten Gruppiereinrichtung befördern können.

Bei der Vorrichtung und dem Verfahren zur Gruppierung von kontinuierlich angelieferten Produkteinheiten zu Produktgruppen, werden die Produkteinheiten lückenlos auf dem Transportband in einem Förderstrom in Förderrichtung befördert. Die Verteilereinrichtung teilt den einen Förderstrom in zwei Förderströme und beliefert so zwei Gruppiereinrichtungen mit Produkteinheiten. Dazu weist die Verteilereinrichtung eine in zwei Verteilerplattenhälften teilbare Verteilerplatte auf, welche bei laufendem Transportband eine wählbare Anzahl Produkteinheiten übernehmen und jeweils die Hälfte der übernommenen Produkteinheiten den beiden Gruppiereinrichtungen zuführen kann. Auf diese Weise kann die Abpackgeschwindigkeit erheblich erhöht werden, indem erstens die kontinuierlich Zuführung bei der Übernahme der Produkteinheiten nicht gestoppt werden muss und zweitens zwei Gruppiereinrichtungen gleichzeitig mit Produkteinheiten beliefert werden können.

In einer Ausführungsform kann die Verteilereinrichtung weiter einen Schieber umfassen, welcher synchron mit der Verteilerplatte in Förderrichtung bewegbar ist und in Bezug auf die Verteilerplatte an der gegenüberliegenden Seite des Transportbands angeordnet ist, so dass mittels dem Schieber die wählbare Anzahl Produkteinheiten, vorzugsweise bei laufendem Transportband und quer zur Förderrichtung, vom Transportband auf die Verteilerplatte geschoben werden kann.

In einer Ausführungsform kann zur Übergabe der Produkteinheiten von den jeweiligen Verteilerplattenhälften zur ersten respektive zweiten Gruppiereinrichtung die Vorrichtung zum Abpacken einen ersten Verteilschieber und eine zweiten Verteilschieber umfassen, mittels denen jeweils die auf der ersten respektive zweiten Verteilerplattenhälfte angeordneten Produkteinheiten auf eine ersten respektive zweite Gruppierplatte der ersten respektive zweiten Gruppiereinrichtung übergeben werden kann. Der erste und zweiten Verteilschieber können dabei oberhalb des Transportbands angeordnet sein.

In allen Ausführungsformen können die erste und zweite Verteilerplattenhälfte können zusätzlich jeweils senkrecht zur Förderrichtung des Transportbands nach oben und nach unten bewegbar sein, was einer geringere Baugrösse der gesamten Vorrichtung erlaubt. Diese vertikale Verschiebung hat insbesondere den Vorteil, dass bei der Verwendung von oberhalb des Transportbands angeordneten ersten und zweiten Verteilschiebern die beiden Verteilerhälften bereits während dem Zurückfahren der Verteilschieber wieder nach unten zurück in die Übernahmeposition bewegt werden können. Dadurch kann die Abpackgeschwindigkeit weiter erhöht werden.

In allen Ausführungsformen können die erste und zweite Gruppierplatte jeweils senkrecht zur Förderrichtung des Transportbands nach oben und nach unten und parallel zur Transportrichtung des Transportbands bewegbar sein, um die Produkteinheiten in eine bereitgestellte Schachtel oder auf einen Dornenplatte zu Produktgruppen zu gruppieren. Die vertikale Verschiebbarkeit erlaubt die Verteilung der Produktgruppen auf einzelne Lagen und die horizontale Verschiebbarkeit erlaubt ein Versetzen der einzelnen Lagen zueinander für eine optimale Packung.

Das Verfahren zum Abpacken von länglichen, mindestens annähernd hohlzylindrischen Produkteinheiten, vorzugsweise Tuben, Hülsen oder Dosen, umfassend folgende Schritte: a) Bereitstellen eines kontinuierlichen Förderstroms von mehreren Produkteinheiten in eine Förderrichtung auf einem Transportband; b) Übergabe einer wählbaren Anzahl Produkteinheiten vom Transportband auf eine in eine erste und eine zweite Verteilerplattenhälfte teilbare Verteilerplatte; c) Teilen der Verteilerplatte in die erste und zweite Verteilerplattenhälften, wobei die beiden Verteilerplattenhälften jeweils die Hälfte der übergebenen Produkteinheiten zu jeweils einer ersten respektive zweiten Gruppiereinrichtung befördern; d) Übergabe der Produkteinheiten von den beiden Verteilerplattenhälften an die Gruppiereinrichtung; und e) Zurückfahren der Verteilerplattenhälften zur erneuten Durchführung des Schrittes b) bis e).

Vorzugsweise wird beim Schritt a) jede Produkteinheit auf dem Transportband in jeweils einer Produktaufnahme platziert. Die Übergabe im Schritt b) kann bei laufendem Transportband durchgeführt werden, indem die zu übergebenden Produkteinheiten auf dem Transportband und die Verteilerplatte eine gemeinsame Übergabestrecke abfahren. In der Regel ist während dem Schritt b) die in Förderrichtung vorderste Produktaufnahme der Verteilerplatte in Übereinstimmung mit der Produktaufnahme der vordersten Produkteinheit auf dem Transportband. Zur Übergabe im Schritt b) kann ein Schieber eingesetzt werden, welcher sich in Transportrichtung synchron mit der Verteilerplatte bewegt.

### Kurze Erläuterung zu den Figuren

Die Erfindung soll nachfolgend anhand von Ausführungsbeispielen im Zusammenhang mit der Zeichnung näher erläutert werden. Es zeigen:
- Fig. 1: ein perspektivischen Ansicht einer Vorrichtung zum Abpacken von Tuben mit einer Verteilereinrichtung;
- Fig. 2: eine Seitenansicht der Vorrichtung aus Fig. 1;
- Fig. 3: eine Draufsicht der Vorrichtung aus Fig. 1; und
- Fig. 4: unter (a) bis (e) die einzelnen Schritte eines Verfahrens zum Abpacken von Tuben mittels einer Verteilereinrichtung.

### Wege zur Ausführung der Erfindung

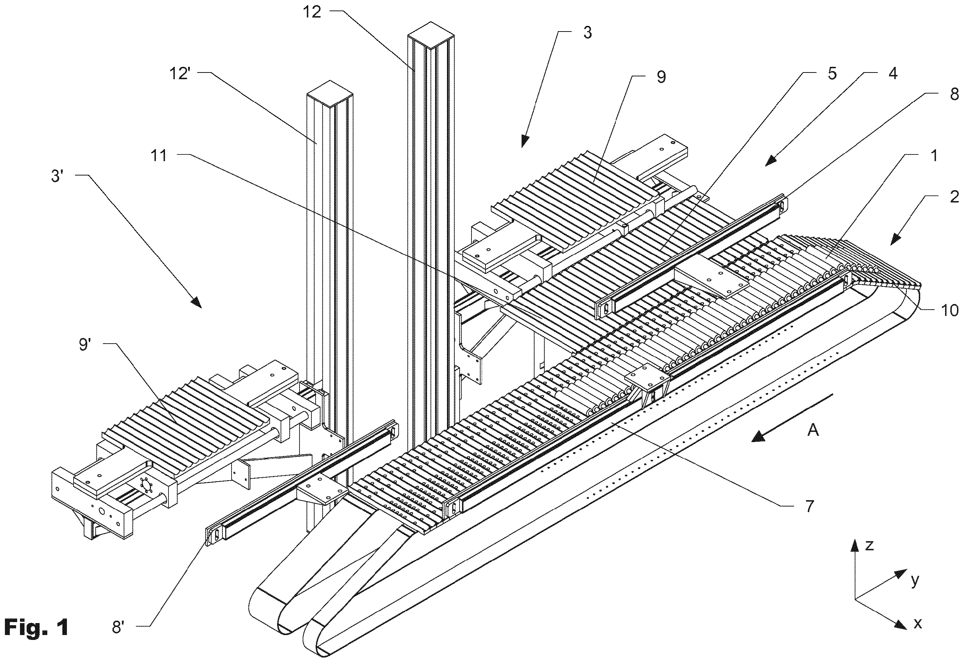

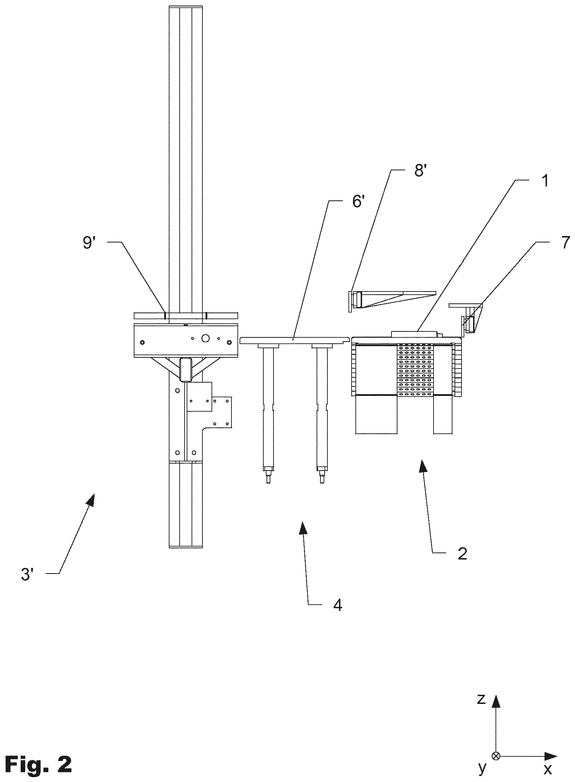

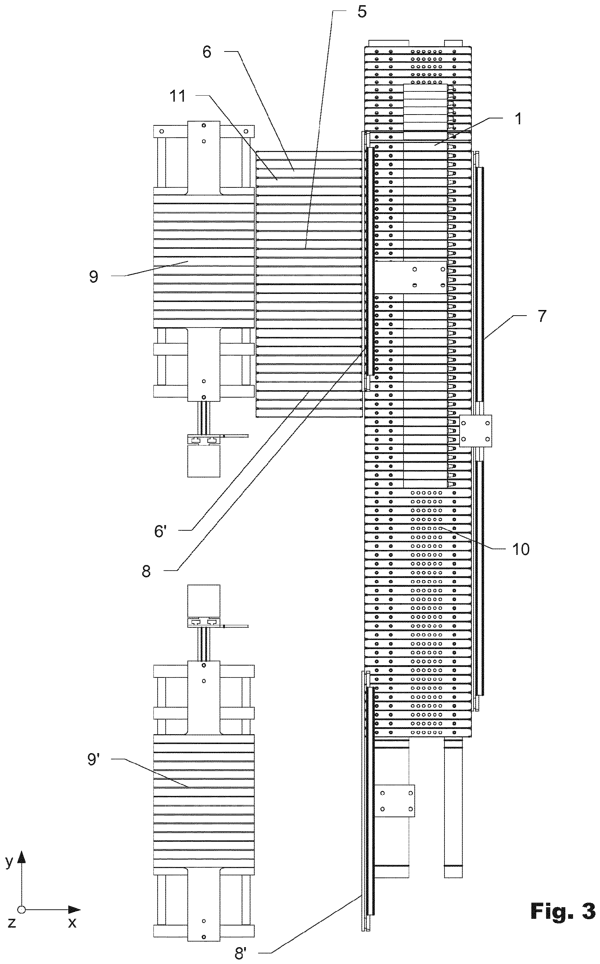

**Fig. 1** zeigt eine Ausführungsform der Vorrichtung zum Abpacken von Tuben mit Verteilereinheit in perspektivischer Ansicht, wobei der Einfachheit halber nur die wichtigsten Elemente dargestellt sind. Beispielsweise wurde die gesamte Tubenzuführung und die eigentlichen Abpackeinrichtung mit Schachtel und/oder Dornenplatte sowie die Mechanik und Lagerung des Transportbandes und der Schieber nicht dargestellt. In **Fig. 2** und **Fig. 3** zeigen die Vorrichtung aus Fig. 1 in einer Seitenansicht respektive in Draufsicht.

Die Vorrichtung umfasst ein Transportband 2 zur kontinuierlich Förderung von in Produktaufnahmen 10 angeordneten Tuben 1. In den Figuren ist jeweils nur ein Teil der über das gesamte Transportband verteilten Produktaufnahmen 10 dargestellt. Die Tuben werden mit einer separaten Tubenzuführung lückenlos in die Produktaufnahmen gelegt.

Der Füllzustand der Produktaufnahmen 10 des Transportbandes 2 ist in der Zeichnung lediglich symbolisch zu verstehen. Der Füllzustand verändert sich ständig während des Betriebs.

Die Vorrichtung umfasst weiter eine Verteilereinrichtung 4, mit einer parallel zum Transportband 2 und von diesem beabstandet angeordneten Verteilerplatte 5, wobei der Abstand nur wenige Millimeter aufweist. Die Verteilerplatte 5 weist ebenfalls Produktaufnahmen 11 auf. Die Verteilplatte 5 ist derart gelagert und bewegbar, dass sie synchron mit dem Transportband 2 in Förderrichtung A bewegbar ist, so dass die jeweiligen Produktaufnahmen 10, 11 des Transportbands 2 und der Verteilerplatte 5 während dem Abfahren einer bestimmten Übergabestrecke miteinander fluchten.

An der der Verteilerplatte 5 gegenüberliegenden Seite des Transportbands 2 ist ein Schieber 7 angeordnet, welcher derart gelagert oder aufgehängt ist, dass er synchron mit der Verteilplatte 5 bewegbar ist und ebenfalls die Übergabestrecke abfahren kann. Die Länge des Schiebers 7 entspricht mindestens der Länge der Verteilerplatte 5, so dass sie eine vorbestimmte Anzahl nebeneinander aufgereihten Tuben 1 auf die Verteilerplatte 5 schieben kann. Dazu fluchtet das der Förderrichtung A entgegengesetzte Ende des Schieber 7 im Wesentlichen mit der der Förderrichtung A entgegengesetzten Kante des Verteilerplatte 5. Der Schieber 7 ist weiter derart bewegbar, dass er die angelieferten Tuben 1 quer zur Förderrichtung A vom Transportband 2 auf die Verteilerplatte 5 schieben kann.

Die Verteilerplatte ist in zwei Verteilerplattenhälften 6, 6' teilbar, welche jeweils die Tuben 1 zu einer ersten respektive zweiten Gruppierplatte 9, 9' der ersten respektive zweiten Gruppiereinrichtung 3, 3' befördern können. Dazu sind die beiden Verteilerplattenhälften 6, 6' in ihrer Höhe verstellbar. Weiter ist oberhalb des Transportbands 2 und des Schiebers 7 ein erster und ein zweiter Verteilschieber 8, 8' angeordnet, die jeweils die Tuben 1 quer zur Förderrichtung A von den jeweiligen Verteilerplattenhälften 6, 6' auf die jeweiligen Gruppierplatten 9, 9' schieben können. Die Gruppierplatten 9, 9' sind ebenfalls mit Produktaufnahmen versehen. Die Gruppierplatten 9. 9' sind entlang Pfosten 12, 12' vertikal verschiebbar, um die Tuben 1 zu einer nicht dargestellten Schachtel oder Dornenplatte zu befördern, wo sie auf herkömmliche Art und Weise weiterbefördern respektive abgepackt werden.

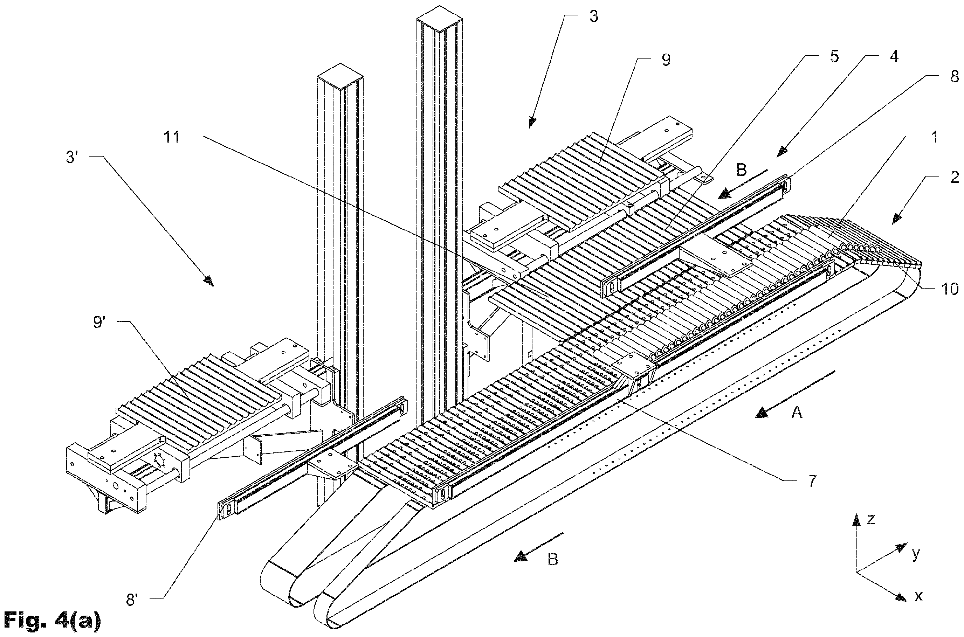

Die **Figuren 4(a) bis 4(e)** zeigen Schritte des Verfahrens zum Abpacken von Tuben 1 auf der Vorrichtung der Figuren 1 bis 3. Die Tuben 1 werden von einer nicht dargestellten Tubenzuführung lückenlos in Produktaufnahmen 10 des Transportband 2 platziert. Sobald genügend Tuben 1 auf dem Transportband 2 platziert sind, bewegen sich sowohl die Verteilerplatte 5 als auch der Schieber 7 (Pfeile B) mit der gleiche Geschwindigkeit wie das Transportband 2 in Förderrichtung A **(****Fig. 4(a)****).** Die Verteilerplatte 5 ist ebenfalls mit Produktaufnahmen 11 versehen, welche zur Übergabe der Tuben 1 mit den Produktaufnahmen 10 des Transportbandes 2 in Übereinstimmung gebracht werden. Der Schieber 7 wird synchron mit der Verteilerplatte bewegt, so dass während der Übergabe der Tuben 1 das hintere Ende des Schiebers 7 mit dem hinteren Ende der Verteilerplatte 5 fluchtet. Die in Förderrichtung A vorderste Produktaufnahme 11 der Verteilerplatte 5 wird mit der Produktaufnahme 10 der vordersten Tube auf dem Transportband 2 in Übereinstimmung gebracht, so dass keine Tube verloren geht.

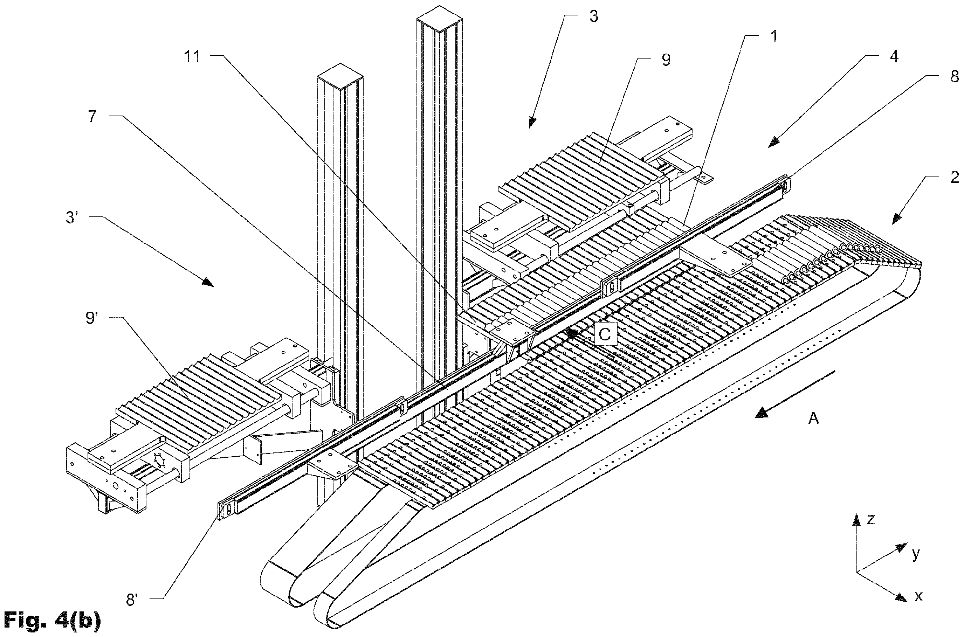

Zur Übergabe der Tuben 1 auf die Verteilerplatte 5 werden die Tuben 1 mit einem Schieber 7 quer zur Förderrichtung A vom Transportband 2 auf die Verteilerplatte 5 geschoben (Pfeile C) **(****Fig. 4(b)****).** Die Übergabe kann bei laufendem Transportband 2 und synchron bewegter Verteilerplatte 5 und Schieber 7 durchgeführt werden, während kontinuierlich weitere Tuben 1 auf dem Förderband 2 platziert werden.

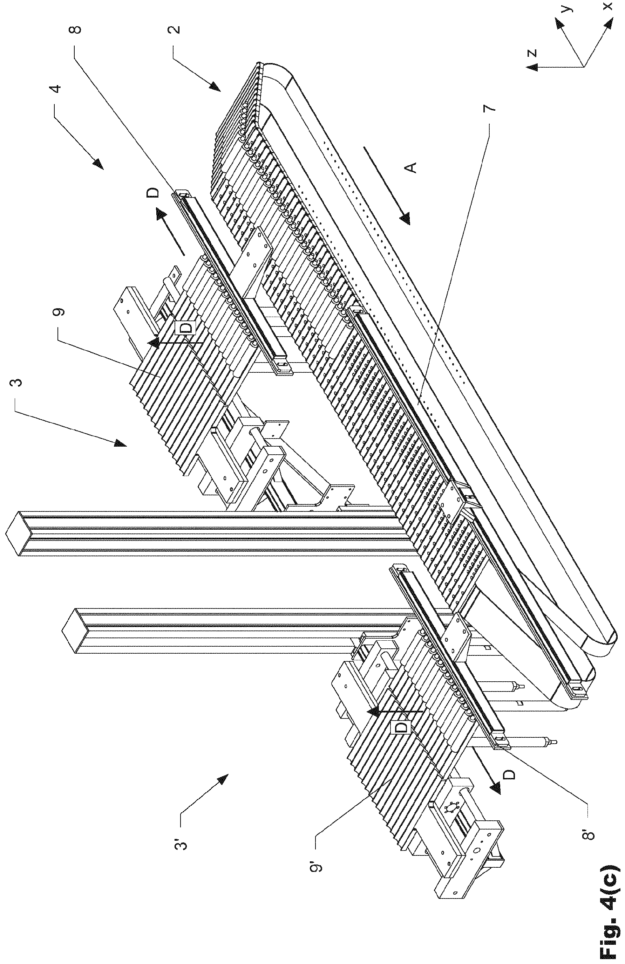

Nach erfolgter Übergabe wird die Verteilerplatte 5 in zwei Verteilerplattenhälften 6, 6' geteilt, die jeweils die Hälfte der übernommenen Tuben 1 zu jeweils einer ersten und einer zweiten Gruppiereinrichtung 3, 3' befördern (Pfeile D) **(****Fig. 4(c)****).** Die beiden Verteilerplatten 6, 6' bewegen sich dabei entlang respektive entgegen der Förderrichtung A und nach oben, um die Produktaufnahmen 11 der Verteilerplattenhälften 6, 6' mit Produktaufnahmen einer ersten und einer zweiten Gruppierplatte 9, 9' der ersten respektive zweiten Gruppiereinrichtung 3, 3' in Übereinstimmung zu bringen.

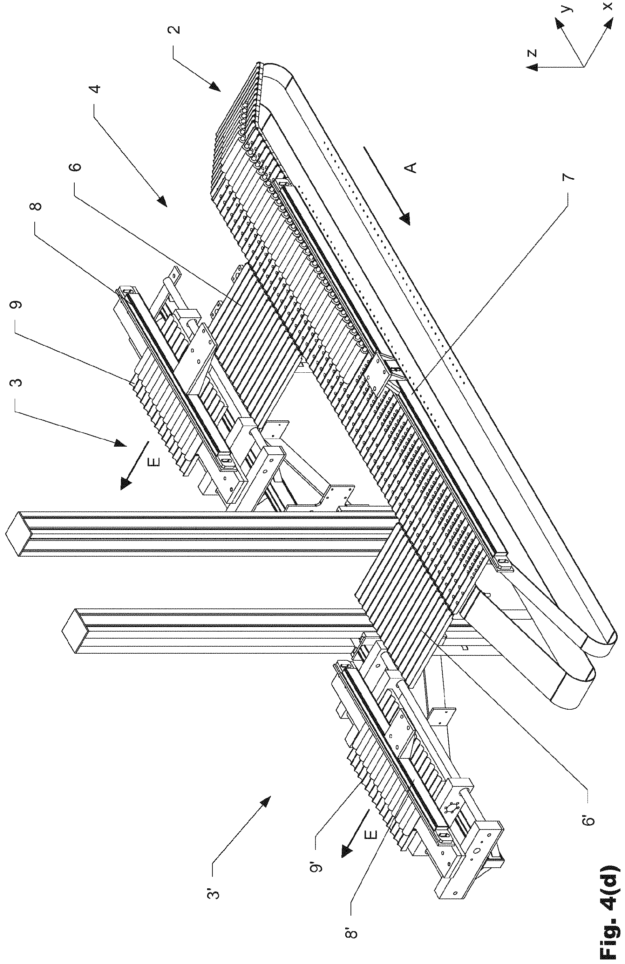

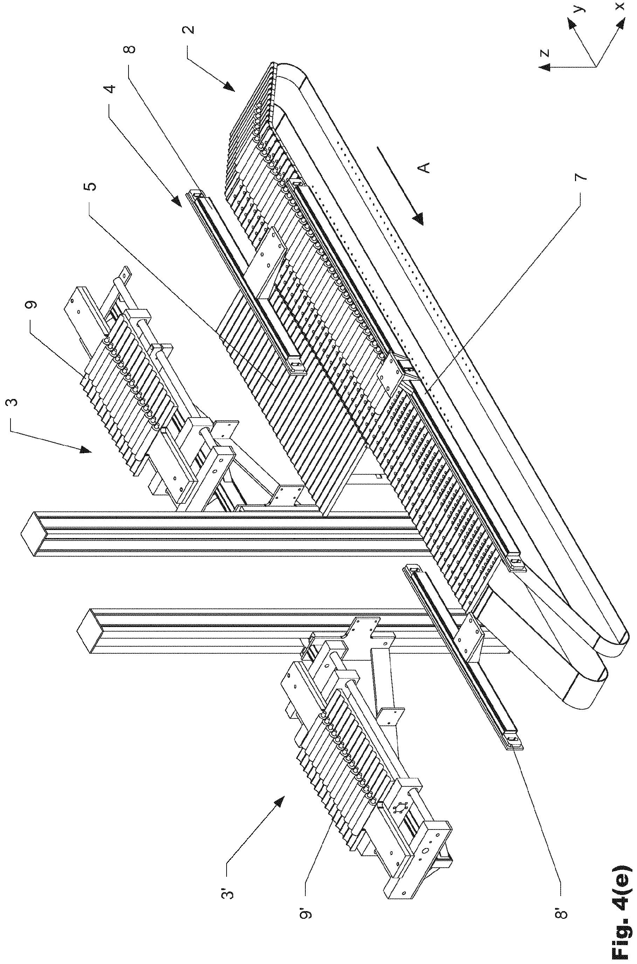

In dieser Position werden mittels einem ersten und einem zweiten Verteilscheiber 8, 8' die jeweiligen Tuben 1 auf die erste respektive die zweiten Gruppierplatte 9, 9' geschoben (Pfeile E) **(****Fig. 4(d)****).** Nach erfolgter Übergabe der Tuben auf die beiden Gruppierplatten 9, 9' bewegen sich die beiden Verteilerplattenhälften 6, 6' zurück und schliessen sich für eine erneute Übernahme von Tuben 1 vom Transportband 2 zur ungeteilten Verteilerplatte 5 zusammen **(****Fig. 4(e)****).** Die Gruppierplatten 9, 9' bewegen sich z.B. nach oben in eine Position, um die Tuben 1 auf herkömmliche Art lagenweise in eine Schachtel oder auf eine Dornenplatte zu überführen (nicht dargestellt).

### Bezeichnungsliste

- 1: Hohlzylindrische Produkteinheiten / Tuben
- 2: Transportband
- 3: erste Gruppiereinrichtung
- 3': zweite Gruppiereinrichtung
- 4: Verteilereinrichtung
- 5: Verteilerplatte
- 6: erste Verteilerplattenhälfte
- 6': zweite Verteilerplattenhälfte
- 7: Schieber
- 8: erster Verteilschieber
- 8': zweiter Verteilschieber
- 9: Gruppierplatte
- 9': Gruppierplatte
- 10: Produktaufnahme
- 11: Produktaufnahme
- 12, 12': Pfosten
- A: Förderrichtung

## Patentansprüche

1. Vorrichtung zum Zuführen von länglichen, mindestens annähernd hohlzylindrischen Produkteinheiten (1), vorzugsweise Tuben, Hülsen oder Dosen, zu Abpackeinheiten, wobei die Vorrichtung ein Transportband (2) zur kontinuierlichen Förderung von mehrere Produkteinheiten (1) in eine Förderrichtung (A) und Mittel zum Verteilen aufweist, um den kontinuierlichen Strom von Produkteinheiten (1) auf zwei parallel arbeitende Abpackeinheiten zu verteilen, **dadurch gekennzeichnet, dass** die Mittel zum Verteilen eine Verteilereinrichtung (4) mit zweiteiliger Verteilerplatte (5) zur Aufnahme einer wählbaren Anzahl Produkteinheiten (1) vom Transportband (2) umfassen, die zur Aufnahme der wählbaren Anzahl Produkteinheiten (1) parallel zur Förderrichtung (A) des Transportbands (2) und synchron mit der Laufgeschwindigkeit des Transportbands (2) bewegbar ist, wobei die Verteilerplatte (5) in zwei Verteilerplattenhälften (6, 6') teilbar ist, die jeweils derart bewegbar sind, dass sie jeweils die Hälfte der von der Verteilerplatte (5) aufgenommenen Produkteinheiten (1) zu den jeweiligen Abpackeinheiten befördern können.

2. Vorrichtung nach Anspruch 1, **dadurch gekennzeichnet, dass** sie als Abpackeinheiten eine erste Gruppiereinrichtung (3) und eine zweite Gruppiereinrichtung (3'), mittels welchen eine wählbare Anzahl von Produkteinheiten (1) lagenweise zu in einer Schachtel ablegbaren Produktgruppen gruppiert werden, aufweist; wobei die Verteilerplatte (5) die aufgenommenen Produkteinheiten (1) zur ersten Gruppiereinrichtung (3) respektive zur zweiten Gruppiereinrichtung (3') befördern kann.

3. Vorrichtung nach einem der vorangehenden Ansprüche, **dadurch gekennzeichnet, dass** die Verteilereinrichtung (4) weiter einen Schieber (7) umfasst, welcher synchron mit der Verteilerplatte (5) in Förderrichtung (A) bewegbar ist und in Bezug auf die Verteilerplatte (5) an der gegenüberliegenden Seite des Transportbands (2) angeordnet ist, so dass mittels dem Schieber (7) die wählbare Anzahl Produkteinheiten (1) vom Transportband (2) auf die Verteilerplatte (5) geschoben werden kann.

4. Vorrichtung nach einem der vorangehenden Ansprüche, **dadurch gekennzeichnet, dass** sie einen ersten Verteilschieber (8) und eine zweiten Verteilschieber (8') umfasst, mittels denen jeweils die auf der ersten respektive zweiten Verteilerplattenhälfte (6, 6') angeordneten Produkteinheiten (1) auf eine ersten respektive zweite Gruppierplatte (9, 9') der ersten respektive zweiten Abpackeinheit oder Gruppiereinrichtung (3, 3') übergeben werden können.

5. Vorrichtung nach Anspruch 4, **dadurch gekennzeichnet, dass** der erste und zweiten Verteilschieber (8, 8') oberhalb des Transportbands (2) angeordnet ist.

6. Vorrichtung nach einem der vorangehenden Ansprüche, **dadurch gekennzeichnet, dass** die erste und zweite Verteilerplattenhälfte (6, 6') jeweils senkrecht zur Förderrichtung (A) des Transportbands (2) nach oben und nach unten bewegbar sind.

7. Vorrichtung nach einem der vorangehenden Ansprüche, **dadurch gekennzeichnet, dass** die erste und zweite Gruppierplatte (9, 9') jeweils senkrecht zur Förderrichtung (A) des Transportbands (2) nach oben und nach unten und parallel zur Transportrichtung (A) des Transportbands (2) bewegbar sind.

8. Verfahren zum Zuführen von länglichen, mindestens annähernd hohlzylindrischen Produkteinheiten (1), vorzugsweise Tuben, Hülsen oder Dosen, zu Abpackeinheiten, indem ein kontinuierlicher Strom von Produkteinheiten mittels einer Verteilereinrichtung auf zwei parallel arbeitende Abpackeinheiten verteilt wird, umfassend folgende Schritte:
a) Bereitstellen eines kontinuierlichen Förderstroms von mehreren Produkteinheiten (1) in eine Förderrichtung (A) auf einem Transportband;
b) Übergabe einer wählbaren Anzahl Produkteinheiten (1) vom Transportband (2) auf eine in eine erste und eine zweite Verteilerplattenhälfte (6, 6') teilbare Verteilerplatte (5), wobei sich die Verteilerplatte (5) synchron mit dem Transportband (2) in Förderrichtung (A) bewegt;
c) Teilen der Verteilerplatte (5) in die erste und zweite Verteilerplattenhälften (6, 6'), wobei die beiden Verteilerplattenhälften (6, 6') jeweils die Hälfte der übergebenen Produkteinheiten (1) zu jeweils einer ersten respektive zweiten Gruppiereinrichtung (3, 3') befördern;
d) Übergabe der Produkteinheiten (1) von den beiden Verteilerplattenhälften (6, 6') an die Gruppiereinrichtung (3, 3'); und
e) Zurückfahren der Verteilerplattenhälften (6, 6') zur erneuten Durchführung der Schritte b) bis e).

9. Verfahren nach Anspruch 8, **dadurch gekennzeichnet, dass** beim Schritt a) jede Produkteinheit (1) auf dem Transportband (2) in jeweils einer Produktaufnahme (10) platziert ist.

10. Verfahren nach einem der Ansprüche 8 bis 9, **dadurch gekennzeichnet, dass** die Übergabe im Schritt b) bei laufendem Transportband durchgeführt wird.

11. Verfahren nach einem der Ansprüche 8 bis 10, **dadurch gekennzeichnet, dass** bei der Übergabe im Schritt b) eine in Förderrichtung vorderste Produktaufnahme (11) der Verteilerplatte in Übereinstimmung mit der Produktaufnahme (10) der vordersten Produkteinheit (1) auf dem Transportband ist.

12. Verfahren nach einem der Ansprüche 8 bis 11, **dadurch gekennzeichnet, dass** zur Übergabe im Schritt b) ein Schieber (7) eingesetzt wird, welcher sich in Transportrichtung (A) synchron mit der Verteilerplatte (5) bewegt.

## Claims

1. Device for supplying elongated, at least approximately hollow-cylindrical product units (1), preferably tubes, sleeves or cans, to packing units, wherein the device comprises a conveyor belt (2) for the continuous conveyance of a plurality of product units (1) in a direction of conveyance (A) and means for distribution in order to distribute the continuous stream of product units (1) to two packing units operating in parallel, **characterised in that** the means for distribution comprise a distribution device (4) with a two-part distribution plate (5) for receiving a selectable number of product units (1) from the conveyor belt (2) and which is able to be moved for receiving the selectable number of product units (1) parallel to the direction of conveyance (A) of the conveyor belt (2) and synchronously with the running speed of the conveyor belt (2), wherein the distribution plate (5) is able to be divided into two distribution plate halves (6, 6') which in each case are able to be moved such that in each case they are able to convey half of the product units (1) received by the distribution plate (5) to the respective packing units.

2. Device according to Claim 1, **characterised in that** it comprises a first grouping device (3) and a second grouping device (3') as packing units, a selectable number of product units (1) being grouped thereby in layers to form product groups which are able to be deposited in a box; wherein the distribution plate (5) is able to convey the received product units (1) to the first grouping device (3), respectively to the second grouping device (3').

3. Device according to one of the preceding claims, **characterised in that** the distribution device (4) further comprises a slider (7) which is able to be moved synchronously with the distribution plate (5) in the direction of conveyance (A) and which is arranged relative to the distribution plate (5) on the opposing side of the conveyor belt (2), so that by means of the slider (7) the selectable number of product units (1) is able to be pushed from the conveyor belt (2) onto the distribution plate (5).

4. Device according to one of the preceding claims, **characterised in that** it comprises a first distribution slider (8) and a second distribution slider (8'), in each case the product units (1) arranged on the first, respectively second, distribution plate half (6, 6') being able to be transferred thereby to a first, respectively second, grouping plate (9, 9') of the first, respectively second, packing unit or grouping device (3, 3').

5. Device according to Claim 4, **characterised in that** the first and second distribution sliders (8, 8') are arranged above the conveyor belt (2).

6. Device according to one of the preceding claims, **characterised in that** the first and second distribution plate halves (6, 6') in each case are able to be moved upwardly and downwardly perpendicular to the direction of conveyance (A) of the conveyor belt (2).

7. Device according to one of the preceding claims, **characterised in that** the first and second grouping plates (9, 9') in each case are able to be moved upwardly and downwardly perpendicular to the direction of conveyance (A) of the conveyor belt (2) and parallel to the direction of transport (A) of the conveyor belt (2).

8. Method for supplying elongated, at least approximately hollow-cylindrical product units (1), preferably tubes, sleeves or cans, to packing units, by a continuous stream of product units being distributed by means of a distribution device to two packing units operating in parallel, comprising the following steps:
a) providing a continuous conveyed stream of a plurality of product units (1) in a direction of conveyance (A) on a conveyor belt;
b) transferring a selectable number of product units (1) from the conveyor belt (2) to a distribution plate (5) which is able to be divided into a first and a second distribution plate half (6, 6'), wherein the distribution plate (5) moves synchronously with the conveyor belt (2) in the direction of conveyance (A);
c) dividing the distribution plate (5) into the first and second distribution plate halves (6, 6'), wherein the two distribution plate halves (6, 6') in each case convey the half of the product units (1) to be transferred in each case to a first, respectively second, grouping device (3, 3');
d) transferring the product units (1) from the two distribution plate halves (6, 6') to the grouping device (3, 3'); and
e) returning the distribution plate halves (6, 6') in order to carry out steps b) to e) again.

9. Method according to Claim 8, **characterised in that** in step a) each product unit (1) is placed on the conveyor belt (2) in one respective product receiver (10).

10. Method according to one of Claims 8 to 9, **characterised in that** the transfer in step b) is carried out when the conveyor belt is running.

11. Method according to one of Claims 8 to 10, **characterised in that** during the transfer in step b) a product receiver (11) of the distribution plate which is furthest to the front in the direction of conveyance coincides with the product receiver (10) of the product unit (1) furthest to the front on the conveyor belt.

12. Method according to one of Claims 8 to 11, **characterised in that** for the transfer in step b) a slider (7) is used, said slider moving synchronously with the distribution plate (5) in the direction of transport (A).

## Revendications

1. Dispositif pour acheminer des produits unitaires allongés (1), au moins approximativement cylindriques creux, de préférence des tubes, des douilles ou des boîtes, à des unités d'emballage, le dispositif présentant une bande transporteuse (2) pour le transport continu de plusieurs produits unitaires (1) dans une direction de transport (A) et des moyens de distribution, afin de distribuer le flux continu de produits unitaires (1) à deux unités d'emballage fonctionnant en parallèle, **caractérisé en ce que** les moyens de distribution comprennent un dispositif de distribution (4) avec une plaque de distribution en deux parties (5) pour recevoir un nombre sélectionnable de produits unitaires (1) provenant de la bande transporteuse (2), lequel peut être déplacé pour recevoir le nombre sélectionnable de produits unitaires (1) parallèlement à la direction de transport (A) de la bande transporteuse (2) et de manière synchronisée avec la vitesse d'avance de la bande transporteuse (2), la plaque de distribution (5) pouvant être divisée en deux moitiés de plaque de distribution (6, 6') qui peuvent chacune être déplacées de telle sorte qu'elles puissent transporter à chaque fois la moitié des produits unitaires (1) reçus par la plaque de distribution (5) jusqu'aux unités d'emballage respectives.

2. Dispositif selon la revendication 1, **caractérisé en ce qu'**il présente en tant qu'unités d'emballage un premier dispositif de regroupement (3) et un deuxième dispositif de regroupement (3'), au moyen desquels un nombre sélectionnable de produits unitaires (1) peut être regroupé par couches pour former un groupe de produits pouvant être déposé en un paquet ; la plaque de distribution (5) pouvant transporter les produits unitaires reçus (1) au premier dispositif de regroupement (3), respectivement au deuxième dispositif de regroupement (3').

3. Dispositif selon l'une quelconque des revendications précédentes, **caractérisé en ce que** le dispositif de distribution (4) comprend en outre un coulisseau (7) qui peut être déplacé de manière synchronisée avec la plaque de distribution (5) dans la direction de transport (A) et qui est disposé par rapport à la plaque de distribution (5) sur le côté opposé de la bande transporteuse (2), de telle sorte qu'au moyen du coulisseau (7) le nombre sélectionnable de produits unitaires (1) puisse être poussé de la bande transporteuse (2) sur la plaque de distribution (5).

4. Dispositif selon l'une quelconque des revendications précédentes, **caractérisé en ce qu'**il comprend un premier coulisseau de distribution (8) et un deuxième coulisseau de distribution (8') au moyen de chacun desquels les produits unitaires (1) disposés sur la première, respectivement la deuxième moitié de plaque de distribution (6, 6') peuvent être transférés à une première, respectivement une deuxième, plaque de regroupement (9, 9') de la première, respectivement la deuxième, unité d'emballage ou du premier, respectivement du deuxième, dispositif de regroupement (3, 3').

5. Dispositif selon la revendication 4, **caractérisé en ce que** le premier et le deuxième coulisseau de distribution (8, 8') sont disposés au-dessus de la bande transporteuse (2).

6. Dispositif selon l'une quelconque des revendications précédentes, **caractérisé en ce que** la première et la deuxième moitié de plaque de distribution (6, 6') sont à chaque fois déplaçables perpendiculairement à la direction de transport (A) de la bande transporteuse (2) vers le haut et vers le bas.

7. Dispositif selon l'une quelconque des revendications précédentes, **caractérisé en ce que** la première et la deuxième plaque de regroupement (9, 9') peuvent chacune être déplacées perpendiculairement à la direction de transport (A) de la bande transporteuse (2) vers le haut et vers le bas et parallèlement à la direction de transport (A) de la bande transporteuse (2).

8. Procédé pour acheminer des produits unitaires allongés (1), au moins approximativement cylindriques creux, de préférence des tubes, des douilles ou des boîtes, à des unités d'emballage, en répartissant un flux continu de produits unitaires au moyen d'un dispositif de distribution sur deux unités d'emballage fonctionnant en parallèle, comprenant les étapes suivantes :
a) fourniture d'un flux de transport continu de plusieurs produits unitaires (1) dans une direction de transport (A) sur une bande transporteuse ;
b) transfert d'un nombre sélectionnable de produits unitaires (1) de la bande transporteuse (2) à une plaque de distribution (5) pouvant être divisée en une première et une deuxième moitié de plaque de distribution (6, 6'), la plaque de distribution (5) se déplaçant de manière synchronisée avec la bande transporteuse (2) dans la direction de transport (A) ;
c) division de la plaque de distribution (5) en la première et la deuxième moitié de plaque de distribution (6, 6'), les deux moitiés de plaque de distribution (6, 6') transportant chacun la moitié des produits unitaires (1) transférés à un premier, respectivement un deuxième, dispositif de regroupement (3, 3') ;
d) transfert des produits unitaires (1) depuis les deux moitiés de plaque de distribution (6, 6') au dispositif de regroupement (3, 3') ; et
e) retour des moitiés de plaque de distribution (6, 6') de manière à réaliser à nouveau les étapes b) à e).

9. Procédé selon la revendication 8, **caractérisé en ce qu'**à l'étape a), chaque produit unitaire (1) est placé sur la bande transporteuse (2) dans un logement de produit respectif (10).

10. Procédé selon l'une quelconque des revendications 8 à 9, **caractérisé en ce que** le transfert à l'étape b) est effectué avec la bande transporteuse en mouvement.

11. Procédé selon l'une quelconque des revendications 8 à 10, **caractérisé en ce que** lors du transfert à l'étape b), un logement de produit (11) de la plaque de distribution le plus en avant dans la direction de transport est en coïncidence avec le logement de produit (10) du produit unitaire le plus en avant (1) sur la bande transporteuse.

12. Procédé selon l'une quelconque des revendications 8 à 11, **caractérisé en ce que** pour le transfert à l'étape b), on utilise un coulisseau (7) qui se déplace dans la direction de transport (A) de manière synchronisée avec la plaque de distribution (5).
